# EUROPEAN PATENT SPECIFICATION

(11) **EP 3 519 518 B1**
(45) Date of publication and mention of the grant of the patent: **13.05.2020**
(21) Application number: 17780683.3
(22) Date of filing: 28.09.2017
(51) Int. Cl.: C09D 183/06, C08G 77/16, C08G 77/18, C08L 83/06

(54) **PRIMER COATING COMPOSITION**
PRIMER-BESCHICHTUNGSZUSAMMENSETZUNG
COMPOSITION DE COUCHE PRIMAIRE

(30) Priority: 29.09.2016 EP 16191353
(43) Date of publication of application: 07.08.2019
(73) Proprietor: Jotun A/S, 3202 Sandefjord (NO)
(72) Inventor: MARTINSEN, Morten, 3202 Sandefjord (NO)
(74) Representative: Dehns
(86) International application number: PCT/EP2017/074639
(87) International publication number: WO 2018/060336

(56) References cited:
- BE-A- 867 050
- DE-A1- 4 235 323
- JP-A- 2008 175 241
- JP-A- 2011 102 359

## Description

### Field of the Invention

This invention relates to primer coating compositions, in particular to a one-component zinc-rich primer coating composition. The invention further relates to substrates and articles coated with the coating composition and to the use of the coating composition in coating articles.

### Background

Zinc primers are used extensively in the marine and offshore industry and may also be specified for coating substrates such as bridges, containers, refineries, petrochemical plants, power-plants, storage tanks, cranes, windmills and steel structures part of civil structures e.g. airports. They are employed as an anti-corrosive layer on a substrate, in particular a steel substrate.

In zinc primers, zinc is present as a particulate which acts to protect the coated substrate from corrosion. It does so in two ways. Firstly, the coating of the substrate with a composition containing corrosion-resistant zinc helps prevent corrosive substances from reaching the more vulnerable substrate. Secondly, the zinc serves as a sacrificial anode so that even if the coating is scratched, the exposed substrate will still be protected. The resistance to corrosion relies on the transfer of galvanic current by the zinc primer but as long as the conductivity in the system is preserved and as long there is sufficient zinc to act as anode the substrate will be protected galvanically.

Zinc primers are well known in the art and are described in, for example, WO 2014/032844. The coating compositions in this publication comprise a binder system and zinc particles, together with hollow glass microspheres and a conductive pigment. The microspheres and conductive pigment are added to help improve the performance of the coating, particularly in terms of rust creep.

Typically, zinc rich primers are prepared as two-component systems. This is because the zinc particles tend to catalyse crosslinking of the binder and thus these two components should be kept separate until the time of application. These plural component zinc rich primers offer excellent performance, but for maintenance work, often done by unskilled painters, the mixing of the components adds complexity to the work and wrong mixing may influence the performance of the product which in the worst case can lead to paint failure. There is therefore a desire in the industry to develop single component systems, which reduce the complexity of the task and can help to eliminate paint failure due to improper mixing or handling of the paint. Other potential advantages of one-component systems include savings in time and labour and a reduction in waste.

The compositions of DE-A-42 35 323 are anti-corrosion one-component or two-component coating compositions comprising organopolysiloxane resins, mono-organo-silanolates or their condensation products, water and zinc particles in order to provide coated metal surfaces with good anti-corrosion properties.

The compositions of BE-A-867 050 are able to form storage stable, quick drying zinc anti-corrosion coatings wherein the one-component composition comprises zinc particles, an organo silicate such as a tetraalkyl silicate or an alkoxy silane and a hydrolysable silicon compound chosen from aminosilanes and quaternary ammonium salts of the aminosilanes, zinc powder and an organic solvent.

The coating compositions of JP-A-2008 175241 provide good anti-corrosion properties and comprise a binder based on an organopolysiloxane and silica, rust preventive pigments such as aluminium pigments, a water-soluble or hydrolysable amino-containing silane compound and zinc powder.

Finally, the compositions of JP-A-2011 102359 are used as coating compositions for forming a primer layer to be interposed between two layers and comprise an organic solvent and coated zinc oxide fine particles obtained in situ by mixing a silane compound such as a polysiloxane having alkoxysilyl group and/or a silanol and zinc oxide particles.

To date only a single one-component zinc-rich primer is available on the market. This product is described in BE 1008926 and is sold under the trade name Zinga ®. The coating system comprises at least 95 wt% zinc as a dry film.

Because of the role zinc plays in the anti-corrosive properties of the primer, zinc particles are typically packed closely together and primers are generally formulated with very high loadings of zinc powder. However, the higher the amount of zinc present in the coating, the higher the viscosity. It is undesirable to have a coating composition with too high a viscosity and this problem is usually combatted by increasing the solvent content. Dilute primer coatings composition often fail to meet the required film thickness when applied in a single coat, however, and thus multiple coats are required, which has both time and cost implications. As a result, there remains a desire to develop a zinc-rich primer which performs effectively even with lower zinc contents.

Zinc primers may be based on a number of binder systems, such as silicates, epoxy, polyurethanes, cyclized rubbers, phenoxy resin, epoxy ester or urethane alkyd. Polysiloxanes are also a well-known class of binder systems. These types of resins offer potential benefits such as good weatherability, abrasion and corrosion resistance and lower volatile organic contents. Systems based on polysiloxane resins may also possess shorter curing times compared to epoxy systems and can be effectively formulated with a higher volume solids content.

It is thus an object of the present invention to provide a novel zinc primer coating composition which can be supplied as a single component system. It would also be advantageous for the primer composition to possess good corrosion resistance even at reduced zinc contents. In particular, a coating which can provide the necessary corrosion resistance at lower film thicknesses than those coatings currently available is desired. Ideally, a composition which offers improvement in more than one of the above aspects would be developed.

The present inventors have surprisingly found that by combining at least one polysiloxane, at least one silane and zinc particles, a single component primer composition possessing good corrosion resistance may be prepared. This unexpectedly leads to a one-component primer composition which provides an effective result when compared to the traditional two component systems. The invention offers the possibility of a route to a single coat primer layer which can be applied at lower thicknesses compared to products currently available.

### Summary

Thus, in a first aspect, the invention provides a one-component coating composition comprising:
(i) at least one alkoxy or silanol functional polysiloxane;
(ii) at least one silane;
(iii) zinc particles; and
(iv) an organic solvent.

Alternatively viewed, the invention provides a non-aqueous one-component coating composition comprising:
(i) at least one alkoxy or silanol functional polysiloxane;
(ii) at least one silane; and
(iii) zinc particles.

In another aspect, the invention provides for the use of a coating composition as hereinbefore described for coating a substrate or article.

In a further aspect, the invention provides a process for coating a substrate or article comprising coating a substrate or article with a composition as hereinbefore described.

In a further aspect, the invention provides a substrate or article coated with a coating composition as hereinbefore described.

### Detailed Description

This invention relates to a coating composition, in particular a zinc-rich primer coating composition, which can be used to coat a substrate. The coating composition contains at least four elements which are all combined in a single component: (i) at least one polysiloxane, (ii) at least one silane, (iii) zinc particles and (iv) an organic solvent.

### Polysiloxane

The coating compositions of the invention comprise at least one polysiloxane binder resin. The term "polysiloxane binder resin" should be construed as a polymer resin with at least two siloxane functional groups. It will be appreciated that the term "silicone" may be used to describe the polysiloxanes of the invention and thus "silicone" and "polysiloxane" may be used interchangeably.

The polymer may be a homopolymer or copolymer, preferably a homopolymer.

In a preferred embodiment, the at least one polysiloxane resin has the formula (I): 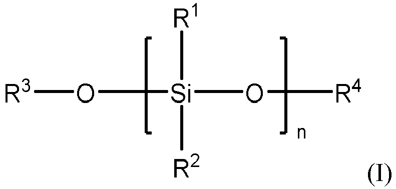
wherein n is an integer from 2-50;
R¹ and R² may each independently be selected from the group consisting of hydrogen, hydroxy, C₁₋₂₀ alkyl (such as C₁₋₆ alkyl groups), C₃₋₁₂ cycloalkyl groups, optionally substituted C₆₋₂₀ aryl groups (such as C₆₋₁₂ aryl groups), C₁₋₆ hydroxyalkyl (e.g. hydroxymethyl, hydroxyethyl), and C₁₋₆-alkoxy (e.g. methoxy, ethoxy, propoxy); and
R³ and R⁴ may each independently be selected from the group consisting of hydrogen, silanol, C₁₋₆ alkyl (e.g. methyl, ethyl); optionally substituted C₆₋₂₀ aryl groups (such as C₆₋₁₂ aryl groups); and C₁₋₆-hydroxyalkyl (e.g. hydroxymethyl, hydroxyethyl).

Alternatively, the polysiloxane comprises a branched alkoxy-functional polysiloxane, in other words a non-linear alkoxy functional polysiloxane, having the formula 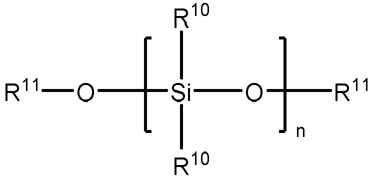 wherein each R10 is independently selected from the group consisting of alkyl, aryl, alkoxy groups having up to six carbon atoms, and OSi (OR12) 3 groups, wherein each R12 independently has the same meaning as R10, each R11 is selected from the group consisting of hydrogen and alkyl and aryl groups having up to six carbon atoms, and wherein n is selected such that the molecular weight of the polysiloxanes is in the range of from 200 to about 5,000, preferably 500-2,000.

The term "alkyl" is intended to cover linear or branched alkyl groups such as methyl, ethyl, propyl, butyl, pentyl and hexyl. Particularly preferable alkyl groups are methyl, pentyl and hexyl. In all embodiments, the alkyl group is preferably linear.

Examples of a substituted aryl groups include aryl groups substituted with at least one substituent selected from halogens, alkyl groups having 1 to 8 carbon atoms, acyl groups, or a nitro group. Particularly preferred aryl groups include substituted and unsubstituted phenyl, benzyl, phenalkyl or naphthyl.

Particularly preferred cycloalkyl groups include cyclopentyl and cyclohexyl.

In one embodiment, the at least one polysiloxane is an alkoxy-functionalised polysiloxane. The term "alkoxy-functionalised polysiloxane" means a linear or branched polymeric constituent having one or more polysiloxane blocks and having pendant and/or terminal alkoxy-functionalities. The polysiloxane may also comprise other curable substituents, such as unsaturated acrylic groups etc.

Any suitable alkoxy-functionalised polysiloxane known in the art may be employed in the present invention. Those skilled in the field of primer coatings will be familiar with the types of polysiloxanes used in this application.

In this embodiment, the substituents on the polysiloxane of formula (I) above may be chosen such that at least one alkoxy functional group is present.

Thus, preferably, either at least one of R¹ and R² is C₁₋₆ alkoxy or at least one of R³ and R⁴ is C₁₋₆ alkyl. Most preferably, R³ or R⁴ is C₁₋₆-alkyl (e.g. methyl).

In a particularly preferred embodiment, R¹ and R² are each independently selected from the group consisting of C₁₋₆ alkyl (e.g. methyl, ethyl) and unsubstituted C₆₋₁₂ aryl groups.

In one specific embodiment, R¹ is methyl and R² is phenyl.

An example of alkoxy-functional polysiloxanes is methoxy methylphenylsiloxane.

Alkoxy-functional polysiloxanes which are suitable for use in the present invention are commercially available and include, but are not limited to, for example, methoxy-functional silicones, including DC-3074 and DC-3037, commercially available from Dow Corning; and GE SR 191, SY-550, and SY-231, commercially available from Wacker Silicones

In an alternative embodiment, the at least one polysiloxane may be a silanol functional polysiloxane. The term "silanol-functionalised polysiloxane" means a linear or branched polymeric constituent having one or more polysiloxane blocks and having pendant and/or terminal silanol-functionalities. The polysiloxane may also comprise other curable substituents, such as unsaturated acrylic groups etc.

Any suitable silanol-functionalised polysiloxane known in the art may be employed in the present invention. Those skilled in the field of primer coatings will be familiar with the types of polysiloxanes used in this application.

In this embodiment, the substituents on the polysiloxane of formula (I) above may be chosen such that at least one silanol functional group is present.

Thus, preferably, either at least one of R¹ and R² is hydroxy or at least one of R³ and R⁴ is hydrogen.

Preferably, R³ or R⁴ is hydrogen.

In a particularly preferred embodiment, R¹ and R² are each independently selected from the group consisting of C₁₋₆ alkyl (e.g. methyl, ethyl) and unsubstituted C₆₋₁₂ aryl groups.

In one specific embodiment, R¹ is methyl and R² is phenyl. In another embodiment, R¹ and R² are both phenyl.

An example of silanol-functional polysiloxanes is diphenyl dihydroxy silane.

Silanol-functional polysiloxanes which are suitable for use in the present invention are commercially available and include, but are not limited to, for example, diphenyldihydroxy silanes, as well as, Dow Coming's DC-805, DC-409HS, and DC- 840.

Whilst it is within the ambit of the invention for the coating composition to comprise two or more different polysiloxanes, such as a mixture of at least one alkoxy functional polysiloxane and at least one silanol functional polysiloxane, it is preferable if only a single polysiloxane is employed.

The at least one polysiloxane is typically present in an amount of 2 to 15 wt%, preferably 3 to 12 wt%, such as 5-10 wt% relative to the total weight of the composition as a whole. Where more than one polysiloxane is present it will be understood that these figures refer to the total amount of all polysiloxane resin binders present.

The weight average molecular weight of the at least one polysiloxane may be in the range 200 to 500,000. Preferably, the weight average molecular weight is in the range 10,000 to 400,000, such as 50,000 to 300,000, e.g. 200,000 to 300,000. In other embodiments, the weight average molecular weight may be in the range 500 to 7000, such as 750 to 5000, e.g. 1000 to 2000.

### Silane

The coating compositions of the invention also comprise at least one silane. Within the context of the invention, the term "silane" will be understood to mean a compound comprising at least one silicon atom. The silane performs two functions in the coating composition: it serves as a crosslinker and also as a base to help facilitate the hydrolysis and condensation reactions that occur during curing.

It will be understood that, in general, the same compound may not function as both the polysiloxane and the silane in the coating compositions of the invention. Thus, typically, components (i) and (ii) are not the same.

Any suitable silane known in the art may be used as component (ii) in the present invention, however it is preferable if the silane has the formula (II): 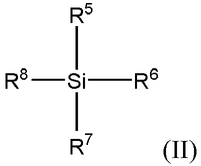 wherein R⁵-R⁸ may each independently be selected from the group consisting of hydrogen, hydroxy, C₁₋₂₀ alkyl (such as C₁₋₆ alkyl groups), C₃₋₁₂ cycloalkyl groups, C₁₋₆ hydroxyalkyl (e.g. hydroxymethyl, hydroxyethyl), C₁₋₆-alkoxy (e.g. methoxy, ethoxy, propoxy), C₁₋₆ acyloxy, R^{a}NHR^{b}NH₂ wherein R^{a} and R^{b} may be the same or different and each is a C₁₋₂₀ alkylene (such as a C₁₋₆ alkylene) group, and NR⁹ wherein R⁹ may be hydrogen or C₁₋₂₀ alkyl (such as C₁₋₆ alkyl).

In the above formula (II) all of R⁵-R⁸ may be represented by a different radical. Alternatively, any two or more of R⁵-R⁸ may be represented by the same radical.

In one preferable embodiment, the silane is an alkoxysilane, i.e. a silane of formula (II) above wherein at least one of R⁵-R⁸ is C₁₋₆ alkoxy.

The alkoxysilane may be represented by the formula (III) below: 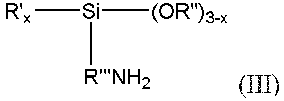 wherein each R' may be the same or different and is selected from the group consisting of C₁₋₂₀ alkyl groups (such as C₁₋₆ alkyl groups), C₃₋₁₂ cycloalkyl groups, C₆₋₂₀ aryl groups (such as C₆₋₁₂ aryl groups), each R" may be the same or different and is a C₁₋₆-alkyl (e.g. methyl, ethyl) group; R''' is selected from the group consisting of a C₁₋₂₀ alkylene (such as a C₁₋₈ alkylene) group and R^{a}NHR^{b} wherein R^{a} and R^{b} may be the same or different and each is a C₁₋₂₀ alkylene (such as a C₁₋₆ alkylene) group, and x is an integer from 0 to 2.

The term "alkyl" is intended to cover linear or branched alkyl groups such as methyl, ethyl, propyl, butyl, pentyl and hexyl. Particularly preferable alkyl groups are methyl, ethyl and propyl. In all embodiments, the alkyl group is preferably linear.

Examples of aryl groups include phenyl, benzyl, phenalkyl or naphthyl.

Particularly preferred cycloalkyl groups include cyclopentyl and cyclohexyl.

Preferably, R" is methyl or ethyl.

In one embodiment, x is preferably 1 and both R' and R" are C₁₋₆ alkyl groups (e.g. methyl, ethyl).

In all embodiments of formula (III), it is preferable if R''' is represented by R^{a}NHR^{b} wherein R^{a} and R^{b} are each independently a C₁₋₆ alkylene group (e.g. methyl, ethyl, propyl). In one aspect, R^{a} is propyl and R^{b} is ethyl.

Particularly preferable alkoxysilanes include (3-aminopropyl) trimethoxysilane (AMMO), (3-Aminopropyl)triethoxysilane (AMEO) and N- (2-aminoethyl)-3-aminopropylmethyldimethoxysilane, aminoethyltriethoxysilane, , 3-aminopropylethyldiethoxysilane, 3 -aminoprolyl-methyldiethoxysilane, bis(3-triethoxysilylpropylamine, TRIAMO, 3-aminoethylaminopropyltrimethoxysilane, N-(2-aminoethyl)-3-aminopropyl-trimethoxysilane, N-(2-aminoethyl)-3-aminopropyl-methyldimethoxysilane, 3-aminopropylphenyldiethoxysilane, 4-aminobutyltriethoxysilane, 4-aminobutylethyldiethoxysilane, N-(2-aminoethyl)-2-aminopropyltriethoxysilane, N-(3-methyldimethoxysilylpropyl)diethylenetriamine, N-ethyl-N-(triethoxysilylmethyl)ethanamine or a combination thereof.

In an alternative preferable embodiment, the silane is an alkylsilicate. The alkylsilicate may be represented by the formula IV below: 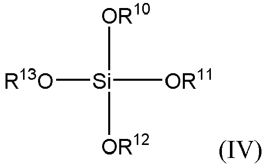
wherein R¹⁰ to R¹³ may be the same or different and each is a C₁₋₆ alkyl group, such as methyl, ethyl or propyl, most preferably ethyl.
Preferably R¹⁰ to R¹³ are the same.

A particularly preferable alkylsilicate is tetraethyl ortho silicate (TEOS).

In embodiments wherein the silane is an alkylsilicate, the coating composition of the invention will typically further comprise at least one base. Examples of suitable bases include amidines, guanidines, phosphazenes, proazaphosphatranes, and combinations thereof. A preferable base is a guanidine, such as 1,1,3,3-tetramethyl guanidine.

Whilst it is within the ambit of the invention for the coating composition to comprise two or more different silanes, such as a mixture of at least one alkoxysilane and at least one alkylsilicate, it is preferable if only a single polysiloxane is employed.

The at least one silane is typically present in an amount of 0.5 to 10 wt%, preferably 0.8 to 5 wt%, such as 1-3 wt% relative to the total weight of the composition as a whole.

In all embodiments, it is preferred if the weight ratio of the at least one silane (ii) to the at least one polysiloxane (i) in the composition is in the range 10:1 to 1:10, more preferably 4:1 to 1:4, such as 2:1 to 1:2, e.g. 1:1.

### Zinc Particles

The term "zinc particles" in the context of the invention means a particulate material with a high content of zinc, preferably at least 90% by weight of zinc, such as at least 95% by weight of zinc.

The term "particulate material" is intended to cover both fine spherical or irregularly shaped particles and other shapes such as flakes, discs, spheres, needles, platelets, fibres and rods. The particulate material may be a powder or a dust, preferably a dust.

The particle size distribution of the particulate material is of some importance in painting applications. For example too coarse particulate materials would result in particles sticking through the dry paint film. This leads to defects in the paint film which detrimentally affects the barrier effect and the anti- corrosion properties. The parameters D50 and D99 are equivalent particle diameters for which the volume cumulative distribution, Q3, assumes values of respectively 50 and 99%.

In a preferred embodiment, the zinc particles have a mean particle size (D50) of less than 50 µm. In a further preferred embodiment, the mean particle size of the zinc particles is less than 20 µm, more preferably less than 15 µm, such as less than 12 µm.

Ideally, the presence of zinc particles coarser than 100 µm should be avoided. Therefore it is useful to discard, e.g. by sieving, any particles larger than 100 µm. The zinc particles thus preferably have a D99 of less than 100 µm.

The particulate materials may be manufactured by classic gas atomization of a corresponding coarse zinc material. The material directly obtained from such a process usually still includes coarse particles, which are incompatible with the present invention. In such cases, these coarse particles are typically removed by a further step, such as sieving.

The zinc particles used in the compositions of the present invention may also be obtained from commercial sources. Suppliers include Purity Zinc Metals, Horsehead Corporation, Umicore, US Zinc, Jiashan Baiwei, and Garrison Minerals, e.g. ZMP 4P16, Umicore (Belgium).

The coating composition of the present invention typically comprises zinc particles in an amount of 50 to 99 wt% relative to the total weight of the composition. Preferably, the zinc particles are present in an amount of 65 to 95 wt%, more preferably 70 to 90 wt% relative to the total weight of the composition.

The zinc particles are in one embodiment present in the coating composition of the present invention in an amount of 65 to 96 wt% of the solids content of the composition as a whole. Preferably, the zinc particles form 70 to 95 wt% of the solids content, more preferably 80 to 95 wt% of the solids content of the composition as a whole. It will be appreciated that the amount of zinc particles present as a wt% of the solids content of the composition as a whole is equivalent to the amount of these particles present in the dry film. Only the solid elements of the composition will remain when the film has dried.

### Additional Components

The coating composition of the present invention may also include other substances commonly used in primer formulations such as other binders, fillers and extenders, pigments, dehydrating agents and drying agents, additives, solvents and thinners.

Dehydrating agents and drying agents contribute to the storage stability of the coating composition by removing moisture introduced from raw materials, such as pigments and solvents, or water formed by reaction between components in the composition. The dehydrating agents and drying agents that may be used include organic and inorganic compounds. Examples of dehydrating agents and drying agents include anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-tert-butyl borate; silicates such as trimethoxymethyl silane, tetraethyl silicate and ethyl polysilicate; and isocyanates, such as p-toluenesulfonyl isocyanate.

The preferred dehydrating agents and drying agents are the inorganic compounds.

Examples of pigments are inorganic pigments such as titanium dioxide, iron oxides, zinc oxide, zinc phosphate, graphite and carbon black; organic pigments such as phthalocyanine compounds and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium sulphate, silicas, silicates, bentonites and other clays; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to a primer coating composition are reinforcing agents, thixotropic agents, thickening agents, anti-settling agents, plasticizers and solvents.

Examples of reinforcing agents are flakes and fibres. Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates, modified ureas and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.5 to 20 wt%, preferably 0.75 to 15 wt% of the primer composition. It will be appreciated that the amount of these optional components will vary depending on the end use.

The coating composition contains an organic solvent. This solvent is preferably volatile. It may have an evaporation rate of more than 0.05 (n-BuAc = 1). Examples of organic solvents and thinners are aromatic hydrocarbons such as xylene, toluene, trimethylbenzene, mesitylene; cyclopentanone, cyclohexanone; esters such as butyl acetate, tert-butyl acetate, amyl acetate, isoamyl acetate, ethylene glycol methyl ether acetate; ethers such as ethylene glycol dimethyl ether, diethylene glycol dimethyl ether, dipropylene glycol methyl ether, propylene glycol methyl, etherdibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

A particularly preferred solvent is white spirit.

The amount of solvent is preferably as low as possible but may be up to 50 wt% of the composition, preferably up to 45 wt% of the composition, such as up to 40 wt% but may be as low as 15 wt% or less, e.g. 10 wt% or less. There may be at least 1 w% solvent. Again, the skilled man will appreciate that the solvent content will vary depending on the other components present and the end use of the coating composition.

When the film is cured there is substantially no longer any solvent in the cured film, i.e. less than 0.5 wt% solvent.

### Composition

The coating compositions of the invention are "one-component". This means that they are provided in the form of a single component system wherein all the components are combined and stored in a single container. Thus, the coating compositions of the invention may be contrasted with "two-component" systems wherein certain elements are kept separate and the system is divided into two distinct components.

The volume solids content of the composition is preferably at least 50%, more preferably at least 55%, such as at least 60%. The volume solids may be up to 90%, for example up to 80%.

The coating composition of the invention is typically a moisture curable composition, i.e. it will begin to cure once exposed to moisture or humidity (e.g. by exposure to water). Generally, when the coating composition of the invention is moisture curable it will be capable of curing when exposed to a relative humidity of 10 to 100%, such as 25 to 80%. Preferably, the coating composition cures above 30% relative humidity, e.g. above 40% relative humidity. Exposure to air with the correct humidity may be sufficient to allow curing to commence. It will therefore be appreciated that the coating composition of the invention is preferably non aqueous, i.e. is essentially free of water.

In a preferred embodiment, the coating composition of the invention is curable at ambient temperature, i.e. once exposed to moisture or humidity the components will cure at the temperature in the environment in question without the application of heat. That might typically be in the range of 0 to 50°C. Preferably, curing occurs at less than 40 °C, more preferably at room temperature, i.e. in the range 12 to 35 °C. It will be understood that since the coating compositions of the invention are curable they may be referred to as curable coating compositions.

The coating composition of the invention may have a volatile organic compound (VOC) content of less than 420 g/L. Preferably the VOC content is less than 400 g/L, more preferably less than 370 g/L, even more preferably less than 360 g/L, such as less than 340 g/L.

The viscosity at 23°C of the coating composition is preferably in the range 50 to 200 KU, such as 80 to 120 KU.

### Application

The coating compositions of the invention can be applied to a whole or part of any object surface (substrate). The coating can be applied by any conventional method such as brushing, rolling or spraying (airless or conventional). Preferably, spraying is used.

The composition of the present invention is a coating composition and thus, where a substrate is coated with more than one layer, the composition of the invention is preferably applied as the innermost layer. Thus, the invention also relates to a substrate comprising a multilayer paint composition, said substrate comprising the composition of the invention as the innermost layer.

The layer formed using the coating composition of the invention preferably has a dry film thickness of 60 to 200 µm, more preferably 65 to 125 µm, even more preferably 70 to 100 µm, such as 75 to 85 µm. It will be appreciated that any layer can be laid down using single or multiple applications of the coating.

The zinc particles preferably form 60 to 96 wt% of the dry film, more preferably 70 to 95 wt%, even more preferably 77 to 95 wt%, relative to the total weight of the dry film.

The invention will now be described with reference to the following nonlimiting examples.

### Examples

### Determination methods

### Determination of viscosity using Cone and Plate viscometer

The viscosity of the binders and paint compositions are determined according to ASTM 562:10 (2014) using a Stormer viscometer set at a temperature of 23°C.

### Determination of solids content of the compositions

The solids content in the compositions are calculated in accordance with ASTM D5201-05.

### Calculation of the volatile organic compound (VOC) content of the coating compositions

The volatile organic compound (VOC) content of the coating compositions is calculated in accordance with ASTM D5201-05.

### Drying Time

Drying time was measured using a BK Drying time according to ASTM 5895. Testing conditions: Temperature: 20°C to 25°C; Relative Humidity: 50%. The coating is spread onto a glass slide at a wet film thickness of approximately 120 microns. Dry time is measured through a needle which provides time in minutes.

### Storage stability

Each coating composition was filled in 250 ml paint can and sealed off. The cans were stored at 23°C for 6 months and 50°C for 28 days and were visually inspected for viscosity and settling properties. Pass criteria: No gelling, no hard settling.

### Corrosion Protection

The corrosion protection of the coating systems was assessed by salt spray testing in accordance with ISO 12944. Each system was marked as a "pass" or "fail" at 1440 hours for C5 requirements. Some samples failed by delamination already after 720 hours.

### Rust Creep

Rust creep was measured according to ISO 4628-8:2012.

### Preparation of Compositions

### General procedure

Compositions were prepared by mixing all the indicated ingredients in a dissolver in a conventional manner known to the person skilled in the art.

The compositions of the inventive formulations are presented in Table 1. Selected physical properties of the inventive and comparative primer compositions are set out in Table 2.

**Table 1: Inventive primer formulations - compositions by weight**

| Coating composition A gives 96 wt% zinc in dry film. Compositions B-E give 80 wt% zinc in dry film. | | | | | |
|---|---|---|---|---|---|
| | A | B | C | D | E |
| Methoxy methyl phenyl siloxane | 35 | 18 | 18 | 18 | 18 |
| N-(2-aminoethyl)-3-aminopropylmethyldimethoxy silane | 15 | 4.4 | 4.4 | | |
| Tetraethyl ortho silicate | | | | 4.4 | 4.4 |
| 1,1,3,3-tetramethyl guanidine | | | | 1 | |
| N-butyl acetate | 100 | 17.6 | | | |
| White spirit | | | 17.6 | 17.6 | 17.6 |
| Thickener | 0.5 | 1 | | | |
| Defoamer | 0.2 | 0.6 | | | |
| Zn dust superfine | 960 | 146 | 146 | 146 | 146 |
| Microtalc IT Extra | - | 12.4 | 12.4 | 12.4 | 12.4 |

**Table 2: Physical properties**

| | A | B | C | D | E | Zinga | Barrier 80 |
|---|---|---|---|---|---|---|---|
| Volume solids % ASTM D5201 | 62 | 70 | 68 | 63 | 63 | 58 | 53 |
| VOC g/L (calculated) | 337 | 270 | 252 | 296 | 296 | 474* | 428* |
| Viscosity (KU) | 111.6 | 85 | 85 | 90 | 90 | 92 | 80 |
| Drying time B&K T4 [hr] | 01:30 | 01:30 | 01:30 | 01:30 | No curing | 01:00 | 04:00 |
| Storage stability 6 months @ ambient temperatures | Pass | Pass | Pass | Pass | - | Pass | Pass |
| Storage stability 28 days @ 50 °C* | Pass | Pass | Pass | Pass | - | Pass | Pass |

| | | | | | | | |
|---|---|---|---|---|---|---|---|
| * measured VOC according to TDS Zinga *) = one component zinc rich (min. 96 wt% Zn in dry film) primer from Zinga Barrier 80 = two component zinc rich (min. 80 wt% Zn in dry film) primer from Jotun A/S | | | | | | | |

### Coating Systems

The inventive primer compositions A and B were utilised in a number of coating systems and compared to conventional systems used commercially. The components of each coating system are provided in Table 3 and test results shown in Table 4 (shaded rows indicate the inventive systems).

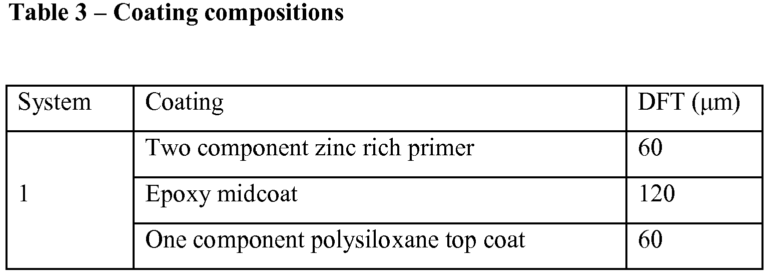

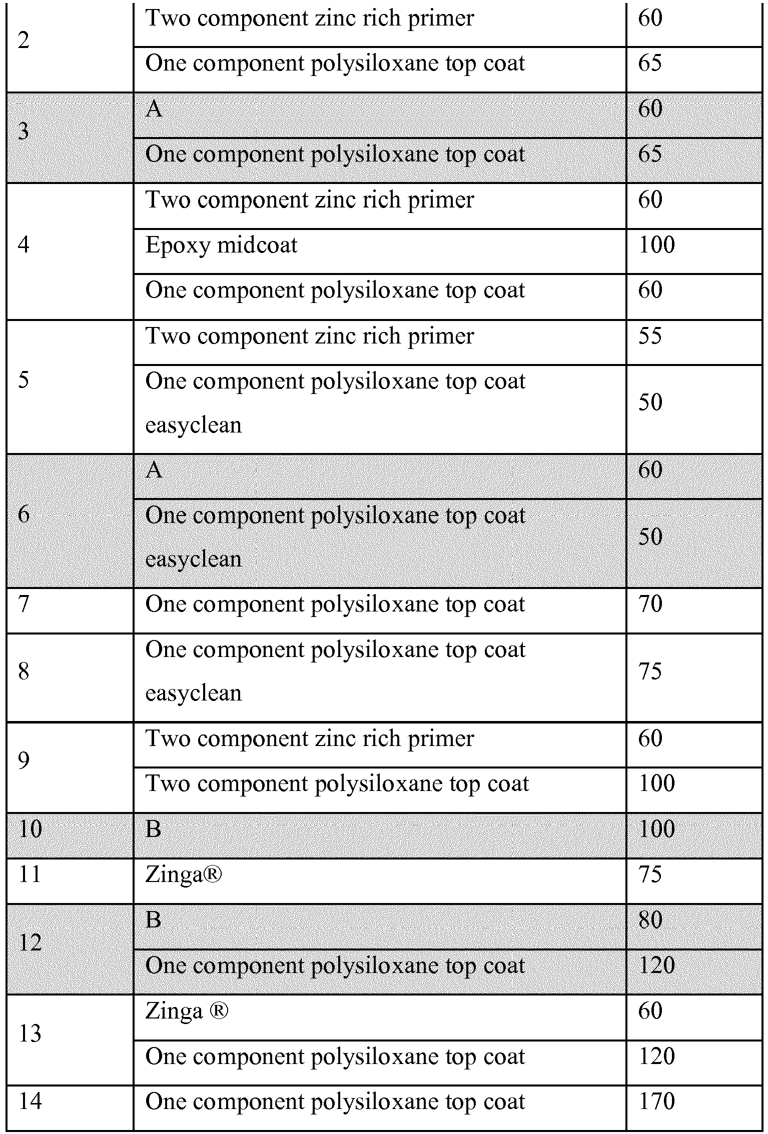

Two component zinc rich primer = Barrier 80 from Jotun A/S Epoxy mid coat = Jotacote universal N10 from Jotun A/S One component polysiloxane top coat without zinc particles Two component polysiloxane top coat = PSX 700 from PPG

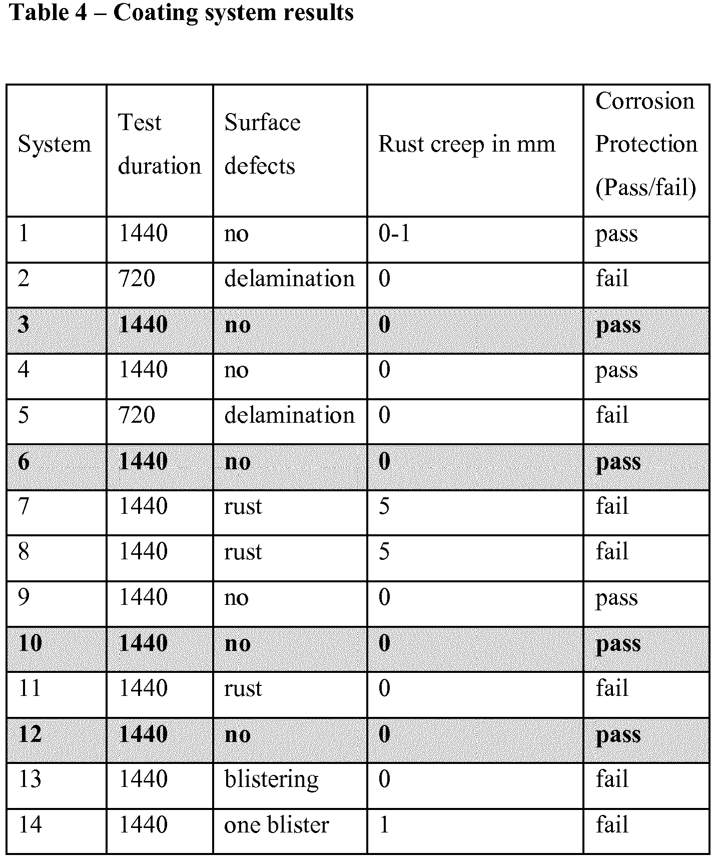

The results show the following:
For one-layer systems (systems 7, 8, 10, 11 and 14): only the inventive system consisting of composition A passes the requirements of the corrosion tests.

For two-layers systems (systems 2, 3, 5, 6, 9, 12 and 13): the inventive systems using either composition A or B pass the corrosion tests requirements. All but one of the other systems fail. System 9, which also passes the tests uses both a two component primer and a two component top coat. The inventive systems possess the advantage of a one component primer, thus offering simplicity and less waste. The results also show that two layer systems using the inventive compositions A and B (systems 3,6 and 12) give as good results as a 3 layer system (system 1 and 4). This demonstrates that good results can be obtained with the advantage of saving one layer. The results also show that you can use thinner layers when using the Inventive systems.

## Claims

1. A one-component coating composition comprising:
(i) at least one alkoxy or silanol functional polysiloxane;
(ii) at least one silane;
(iii) zinc particles; and
(iv) an organic solvent.

2. A coating composition as claimed in claim 1, wherein the at least one polysiloxane is present in an amount of 2 to 15 wt%, preferably 3 to 12 wt%, such as 5-10 wt% relative to the total weight of the composition as a whole.

3. A coating composition as claimed in claim 1 or 2, wherein the at least one polysiloxane resin has the formula (I) : 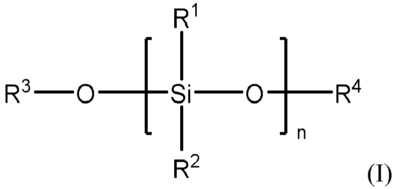
wherein n is an integer from 2-50;
R¹ and R² may each independently be selected from the group consisting of hydrogen, hydroxy, C₁₋₂₀ alkyl (such as C₁₋₆ alkyl groups), C₃₋₁₂ cycloalkyl groups, optionally substituted C₆₋₂₀ aryl groups (such as C₆₋₁₂ aryl groups), C₁₋₆ hydroxyalkyl (e.g. hydroxymethyl, hydroxyethyl), and C₁₋₆-alkoxy (e.g. methoxy, ethoxy, propoxy); and
R³ and R⁴ may each independently be selected from the group consisting of hydrogen, silanol, C₁₋₆ alkyl (e.g. methyl, ethyl); optionally substituted C₆₋₂₀ aryl groups (such as C₆₋₁₂ aryl groups); and C₁₋₆-hydroxyalkyl (e.g. hydroxymethyl, hydroxyethyl).

4. A coating composition as claimed in claim 3, wherein at least one of R¹ and R² is C₁₋₆ alkoxy or at least one of R³ and R⁴ is C₁₋₆ alkyl.

5. A coating composition as claimed in claim 3, wherein either at least one of R¹ and R² is hydroxy or at least one of R³ and R⁴ is hydrogen.

6. A coating composition as claimed in any of claims 1 to 5, wherein the at least one silane is present in an amount of 0.5 to 10 wt%, preferably 0.8 to 5 wt%, such as 1-3 wt% relative to the total weight of the composition as a whole.

7. A coating composition as claimed in any of claims 1 to 6, wherein the silane has the formula (II): 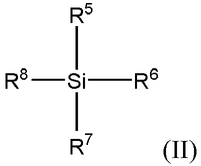 wherein R⁵-R⁸ may each independently be selected from the group consisting of hydrogen, hydroxy, C₁₋₂₀ alkyl (such as C₁₋₆ alkyl groups), C₃₋₁₂ cycloalkyl groups, C₁₋₆ hydroxyalkyl (e.g. hydroxymethyl, hydroxyethyl), C₁₋₆-alkoxy (e.g. methoxy, ethoxy, propoxy), C₁₋₆ acyloxy, R^{a}NHR^{b}NH₂ wherein R^{a} and R^{b} may be the same or different and each is a C₁₋₂₀ alkylene (such as a C₁₋₆ alkylene) group, and NR⁹, wherein R⁹ may be hydrogen or C₁₋₂₀ alkyl (such as C₁₋₆ alkyl).

8. A coating composition as claimed in any of claims 1 to 7, wherein the silane is an alkoxysilane, preferably wherein the silane is represented by formula (III): 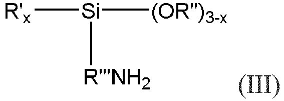 wherein each R' may be the same or different and is selected from the group consisting of C₁₋₂₀ alkyl groups (such as C₁₋₆ alkyl groups), C₃₋₁₂ cycloalkyl groups, C₆₋₂₀ aryl groups (such as C₆₋₁₂ aryl groups), each R" may be the same or different and is a C₁₋₆-alkyl (e.g. methyl, ethyl, propyl) group; R''' is selected from the group consisting of a C₁₋₂₀ alkylene (such as a C₁₋₈ alkylene) group and R^{a}NHR^{b} wherein R^{a} and R^{b} may be the same or different and each is a C₁₋₂₀ alkylene (such as a C₁₋₆ alkylene) group, and x is an integer from 0 to 2.

9. A coating composition as claimed in any of claims 1 to 7, wherein the silane is an alkylsilicate, preferably wherein the alkylsilicate is represented by formula IV: 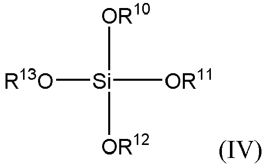 wherein R¹⁰ to R¹³ may be the same or different and each is a C₁₋₆ alkyl group, such as methyl, ethyl or propyl, e.g. ethyl.

10. A coating composition as claimed in any of claims 1 to 9, wherein the weight ratio of the at least one silane (ii) to the at least one polysiloxane (i) in the composition is in the range 10:1 to 1:10, preferably 4:1 to 1:4, more preferably 2:1 to 1:2, e.g. 1:1.

11. A coating composition as claimed in any of claims 1 to 10, wherein the amount of zinc particles is 50 to 99 wt%, preferably 65-95 wt%, more preferably 70 to 90 wt% relative to the total weight of the composition as a whole.

12. A coating composition as claimed in any of claims 1 to 11, wherein the zinc particles are present in an amount of 65 to 96 wt%, preferably 70 to 95 wt%, more preferably 80 to 95 wt% of the solids content of the composition as a whole.

13. A coating composition as claimed in any of claims 1 to 12, wherein the volatile organic compound (VOC) content of the coating composition is less than 420 g/L.

14. The use of a coating composition as defined in any of claims 1 to 12 for coating a substrate or article.

15. A process for coating a substrate or article with a coating composition as defined in any of claims 1 to 12, said process comprising applying said composition to the surface of said substrate or article, preferably by spraying.

16. A substrate or article coated with a coating composition as defined in any of claims 1 to 12.

## Patentansprüche

1. Einkomponenten-Beschichtungszusammensetzung, umfassend:
(i) mindestens ein alkoxy- oder silanolfunktionelles Polysiloxan;
(ii) mindestens ein Silan;
(iii) Zinkpartikel; und
(iv) ein organisches Lösungsmittel.

2. Beschichtungszusammensetzung nach Anspruch 1, wobei das mindestens eine Polysiloxan in einer Menge von 2 bis 15 Gew.-%, vorzugsweise 3 bis 12 Gew.-%, wie 5-10 Gew.-%, bezogen auf das Gesamtgewicht der gesamten Zusammensetzung, vorliegt.

3. Beschichtungszusammensetzung nach Anspruch 1 oder 2, wobei das mindestens eine Polysiloxanharz die Formel (I) aufweist: 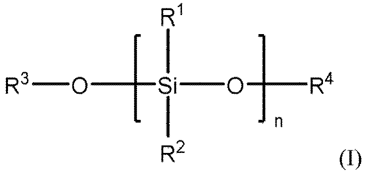
wobei n eine ganze Zahl von 2-50 ist;
R¹ und R² jeweils unabhängig voneinander ausgewählt sein können aus der Gruppe bestehend aus Wasserstoff, Hydroxy, C₁₋₂₀-Alkyl (wie C₁₋₆-Alkylgruppen), C₃₋₁₂-Cycloalkylgruppen, optional substituierten C₆₋₂₀-Arylgruppen (wie C₆₋₁₂-Arylgruppen), C₁₋₆-Hydroxyalkyl (z.B. Hydroxymethyl, Hydroxyethyl) und C₁₋₆-Alkoxy (z.B. Methoxy, Ethoxy, Propoxy); und
R³ und R⁴ jeweils unabhängig voneinander ausgewählt sein können aus der Gruppe bestehend aus Wasserstoff, Silanol, C₁₋₆-Alkyl (z.B. Methyl, Ethyl); optional substituierten C₆₋₂₀-Arylgruppen (wie C₆₋₁₂-Arylgruppen); und C₁₋₆-Hydroxyalkyl (z.B. Hydroxymethyl, Hydroxyethyl).

4. Beschichtungszusammensetzung nach Anspruch 3, wobei mindestens eines von R¹ und R² C₁₋₆-Alkoxy ist oder mindestens eines von R³ und R⁴ C₁₋₆-Alkyl ist.

5. Beschichtungszusammensetzung nach Anspruch 3, wobei entweder mindestens eines von R¹ und R² Hydroxy ist oder mindestens eines von R³ und R⁴ Wasserstoff ist.

6. Beschichtungszusammensetzung nach einem der Ansprüche 1 bis 5, wobei das mindestens eine Silan in einer Menge von 0,5 bis 10 Gew.-%, vorzugsweise 0,8 bis 5 Gew.-%, wie 1-3 Gew.-%, bezogen auf das Gesamtgewicht der gesamten Zusammensetzung, vorliegt.

7. Beschichtungszusammensetzung nach einem der Ansprüche 1 bis 6, wobei das Silan die Formel (II) aufweist: 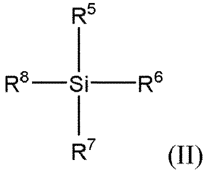 wobei R⁵-R⁸ jeweils unabhängig voneinander ausgewählt sein können aus der Gruppe bestehend aus Wasserstoff, Hydroxy, C₁₋₂₀-Alkyl (wie C₁₋₆-Alkylgruppen), C₃₋₁₂-Cycloalkylgruppen, C₁₋₆-Hydroxyalkyl (z.B. Hydroxymethyl, Hydroxyethyl), C₁₋₆-Alkoxy (z.B. Methoxy, Ethoxy, Propoxy), C₁₋₆-Acyloxy, R^{a}NHR^{b}NH₂, wobei R^{a} und R^{b} gleich oder verschieden sein können und jeweils eine C₁₋₂₀-Alkylengruppe (wie ein C₁₋₆-Alkylen) sind, und NR⁹, wobei R⁹ Wasserstoff oder C₁₋₂₀-Alkyl (wie C₁₋₆-Alkyl) sein kann.

8. Beschichtungszusammensetzung nach einem der Ansprüche 1 bis 7, wobei das Silan ein Alkoxysilan ist, wobei vorzugsweise das Silan durch Formel (III) dargestellt ist: 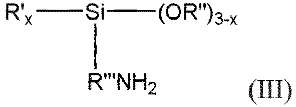 wobei jedes R' gleich oder verschieden sein kann und ausgewählt ist aus der Gruppe bestehend aus C₁₋₂₀-Alkylgruppen (wie C₁₋₆-Alkylgruppen), C₃₋₁₂-Cycloalkylgruppen, C₆₋₂₀-Arylgruppen (wie C₆₋₁₂-Arylgruppen), wobei jedes R" gleich oder verschieden sein kann und eine C₁₋₆-Alkylgruppe (z.B. Methyl, Ethyl, Propyl) ist; R''' ausgewählt ist aus der Gruppe bestehend aus einer C₁₋₂₀-Alkylengruppe (wie einem C₁₋₈-Alkylen) und R^{a}NHR^{b}, wobei R^{a} und R^{b} gleich oder verschieden sein können und jeweils eine C₁₋₂₀-Alkylengruppe (wie ein C₁₋₆-Alkylen) sind, und x eine ganze Zahl von 0 bis 2 ist.

9. Beschichtungszusammensetzung nach einem der Ansprüche 1 bis 7, wobei das Silan ein Alkylsilicat ist, wobei vorzugsweise das Alkylsilicat durch Formel IV dargestellt ist: 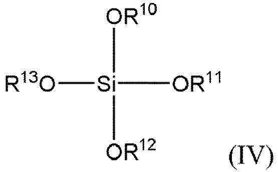 wobei R¹⁰ bis R¹³ gleich oder verschieden sein können und jeweils eine C₁₋₆-Alkylgruppe, wie Methyl, Ethyl oder Propyl, z.B Ethyl, ist.

10. Beschichtungszusammensetzung nach einem der Ansprüche 1 bis 9, wobei das Gewichtsverhältnis des mindestens einen Silans (ii) zu dem mindestens einen Polysiloxan (i) in der Zusammensetzung im Bereich 10:1 bis 1:10, vorzugsweise 4:1 bis 1:4, bevorzugter 2:1 bis 1:2 liegt, z.B. 1:1.

11. Beschichtungszusammensetzung nach einem der Ansprüche 1 bis 10, wobei die Menge an Zinkpartikeln 50 bis 99 Gew.-%, vorzugsweise 65-95 Gew.-%, bevorzugter 70 bis 90 Gew.-%, bezogen auf das Gesamtgewicht der gesamten Zusammensetzung, beträgt.

12. Beschichtungszusammensetzung nach einem der Ansprüche 1 bis 11, wobei die Zinkpartikel in einer Menge von 65 bis 96 Gew.-%, vorzugsweise 70 bis 95 Gew.-%, bevorzugter 80 bis 95 Gew.-% des Feststoffgehalts der gesamten Zusammensetzung vorliegen.

13. Beschichtungszusammensetzung nach einem der Ansprüche 1 bis 12, wobei der Gehalt an flüchtiger organischer Verbindung (VOC) der Beschichtungszusammensetzung weniger als 420 g/L beträgt.

14. Verwendung einer Beschichtungszusammensetzung nach einem der Ansprüche 1 bis 12 zum Beschichten eines Substrats oder eines Artikels.

15. Verfahren zum Beschichten eines Substrats oder eines Artikels mit einer Beschichtungszusammensetzung wie in einem der Ansprüche 1 bis 12 definiert, wobei das Verfahren Aufbringen der Zusammensetzung auf die Oberfläche des Substrats oder des Artikels, vorzugsweise durch Sprühen, umfasst.

16. Substrat oder Artikel, beschichtet mit einer Beschichtungszusammensetzung wie in einem der Ansprüche 1 bis 12 definiert.

## Revendications

1. Composition de revêtement monocomposant, comprenant :
(I) au moins un polysiloxane à fonction alcoxy ou silanol ;
(Ii) au moins un silane;
(Iii) des particules de zinc ; et
(Iv) un solvant organique.

2. Composition de revêtement selon la revendication 1, dans laquelle le au moins un polysiloxane est présent en une quantité de 2 à 15 % en poids, de préférence de 3 à 12 % en poids, comme de 5 à 10% en poids par rapport au poids total de la composition dans son ensemble.

3. Composition de revêtement selon la revendication 1 ou 2, dans laquelle la au moins une résine de polysiloxane a la formule (I) : 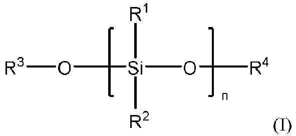
dans laquelle n est un nombre entier de 2 à 50 ;
R¹ et R² peuvent être choisis chacun indépendamment dans le groupe consistant en hydrogène, hydroxy, un alkyle en C₁₋₂₀ (comme des groupes alkyle en C₁₋₆), des groupes cycloalkyle en C₃₋₁₂, des groupes aryle en C₆₋₂₀ facultativement substitués (comme des groupes aryle en C₆₋₁₂), un hydroxyalkyle en C₁₋₆ (par exemple hydroxyméthyle, hydroxyéthyle), et un alcoxy en C₁₋₆ (par exemple méthoxy, éthoxy, propoxy) ; et
R³ et R⁴ peuvent être choisis chacun indépendamment dans le groupe consistant en hydrogène, silanol, un alkyle en C₁₋₆ (par exemple méthyle, éthyle) ; des groupes aryle en C₆₋₂₀ facultativement substitués (par exemple des groupes aryle en C₆₋₁₂) ; et un hydroxyalkyle en C₁₋₆ (par exemple hydroxyméthyle, hydroxyéthyle).

4. Composition de revêtement selon la revendication 3, dans laquelle au moins l'un de R¹ et R² est un alcoxy en C₁₋₆ ou au moins l'un de R³ et R⁴ est un alkyle en C₁₋₆.

5. Composition de revêtement selon la revendication 3, dans laquelle soit au moins l'un de R³ et R⁴ est un hydroxy ou au moins l'un de R³ et R⁴ est un hydrogène.

6. Composition de revêtement selon l'une quelconque des revendications 1 à 5, dans laquelle le au moins un silane est présent en une quantité de 0,5 à 10 % en poids, de préférence de 0,8 à 5 % en poids, comme de 1 à 3 % en poids par rapport au poids total de la composition dans son ensemble.

7. Composition de revêtement selon l'une quelconque des revendications 1 à 6, dans laquelle le silane répond à la formule (II) : 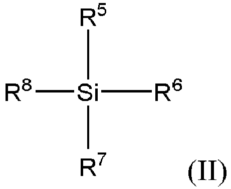 dans laquelle les R⁵ à R⁸ peuvent être chacun choisis indépendamment dans le groupe consistant en hydrogène, hydroxy, un alkyle en C₁₋₂₀ (comme des groupes alkyle en C₁₋₆), des groupes cycloalkyle en C₃₋₁₂, un hydroxyalkyle en C₁₋₆ (par exemple hydroxyméthyle, hydroxyéthyle), un alcoxy en C₁₋₆ (par exemple méthoxy, éthoxy, propoxy), un acyloxy en C₁₋₆, R^{a}NHR^{b}NH₂, dans laquelle R^{a} et R^{b} peuvent être identiques ou différents et chacun est un groupe alkylène en C₁₋₂₀ (comme un alkylène en C₁₋₆), et NR⁹, dans laquelle R⁹ peut être hydrogène ou un alkyle en C₁₋₂₀ (comme un alkyle en C₁₋₆).

8. Composition de revêtement selon l'une quelconque des revendications 1 à 7, dans laquelle le silane est un alcoxysilane, de préférence dans laquelle le silane est représenté par la formule (III) : 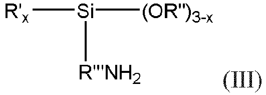 dans laquelle chaque R' peut être identique ou différent et est choisi dans le groupe consistant en des groupes alkyle en C₁₋₂₀ (comme des groupes alkyle en C₁₋₆), des groupes cycloalkyle en C₃₋₁₂, des groupes aryle en C₆₋₂₀ (comme des groupes aryle en C₆₋₁₂), chaque R" peut être identique ou différent et est un groupe alkyle en C₁₋₆ (par exemple méthyle, éthyle, propyle) ; R''' est choisi dans le groupe consistant en un groupe alkylène en C₁₋₂₀ (comme un groupe alkylène en C₁₋₈) et R^{a}NHR^{b}, dans laquelle R^{a} et R^{b} peuvent être identiques ou différents et chacun est un groupe alkylène en C₁₋₂₀ (comme un alkylène en C₁₋₆), et x est un nombre entier de 0 à 2.

9. Composition de revêtement selon l'une quelconque des revendications 1 à 7, dans laquelle le silane est un alkylsilicate, de préférence dans laquelle l'alkylsilicate est représenté par la formule IV : 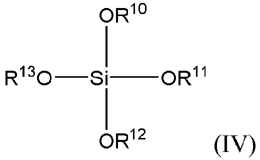 dans laquelle R¹⁰ à R¹³ peuvent être identiques ou différents et chacun est un groupe alkyle en C₁₋₆, comme méthyle, éthyle ou propyle, par exemple éthyle.

10. Composition de revêtement selon l'une quelconque des revendications 1 à 9, dans laquelle le rapport en poids du au moins un silane (ii) au au moins un polysiloxane (i) dans la composition est dans la plage de 10:1 à 1:10, de préférence de 4:1 à 1:4, de manière plus préférée de 2:1 à 1:2, par exemple de 1:1.

11. Composition de revêtement selon l'une quelconque des revendications 1 à 10, dans laquelle la quantité de particules de zinc est de 50 à 99 % en poids, de préférence de 65 à 95 % en poids, de manière plus préférée de 70 à 90 % en poids par rapport au poids total de la composition dans son ensemble.

12. Composition de revêtement selon l'une quelconque des revendications 1 à 11, dans laquelle les particules de zinc sont présentes en une quantité de 65 à 96 % en poids, de préférence 70 à 95 % en poids, de manière plus préférée de 80 à 95 % en poids de la teneur en matières solides de la composition dans son ensemble.

13. Composition de revêtement selon l'une quelconque des revendications 1 à 12, dans lequel la teneur en composés organiques volatils (COV) de la composition de revêtement est inférieure à 420 g/L.

14. Utilisation d'une composition de revêtement telle que définie dans l'une quelconque des revendications 1 à 12 pour le revêtement d'un substrat ou un article.

15. Procédé pour revêtir un substrat ou un article avec une composition de revêtement telle que définie dans l'une quelconque des revendications 1 à 12, ledit procédé comprenant l'application de ladite composition sur la surface dudit substrat ou dudit article, de préférence par pulvérisation.

16. Substrat ou article revêtu avec une composition de revêtement telle que définie dans l'une quelconque des revendications 1 à 12.
